# EUROPEAN PATENT APPLICATION

(11) **EP 4 729 763 A1**
(43) Date of publication of application: **22.04.2026**
(21) Application number: 24823219.1
(22) Date of filing: 28.05.2024
(51) Int. Cl.: F02K 1/09

(54) **GAS TURBINE ENGINE**

(30) Priority: 14.06.2023 JP 2023098111
(71) Applicant: KAWASAKI JUKOGYO KABUSHIKI KAISHA, Kobe-shi, Hyogo 650-8670 (JP)
(72) Inventor: ARAI, Atsunori, Kobe-shi, Hyogo 650-8670 (JP); OKUWA, Tatsuya, Kobe-shi, Hyogo 650-8670 (JP)
(74) Representative: Dantz, Jan Henning
(86) International application number: PCT/JP2024/019468
(87) International publication number: WO 2024/257599

(57) **Abstract**

A gas turbine engine according to one aspect of the present disclosure includes: a tail cone; an exhaust nozzle covering the tail cone from outside in a radial direction, with an exhaust gas passage defined between the exhaust nozzle and the tail cone; a tubular support casing that is located upstream of the exhaust nozzle and that supports the exhaust nozzle movably in a forward/rearward direction; and an actuator that is mounted on the exhaust nozzle or the support casing and that moves the exhaust nozzle relative to the tail cone in the forward/rearward direction to change a cross-sectional area of the exhaust gas passage.

## Description

### Technical Field

The present disclosure relates to gas turbine engines.

### Background Art

Patent Literature 1 listed below discloses a gas turbine engine including a variable exhaust nozzle that can adjust the exhaust area.

### Citation List

### Patent Literature

PTL 1: Japanese Laid-Open Patent Application Publication No. H10-176604

### Summary of Invention

### Technical Problem

The gas turbine engine described in Patent Literature 1 is structurally complex since this engine adjusts the exhaust area by changing the geometry of the variable exhaust nozzle.

An object of one aspect of the present disclosure is therefore to provide a gas turbine engine that can change the cross-sectional area of an exhaust gas passage despite employing an exhaust nozzle with a simple structure.

### Solution to Problem

A gas turbine engine according to one aspect of the present disclosure includes: a tail cone; an exhaust nozzle covering the tail cone from outside in a radial direction, with an exhaust gas passage defined between the exhaust nozzle and the tail cone; a tubular support casing that is located upstream of the exhaust nozzle and that supports the exhaust nozzle movably in a forward/rearward direction; and an actuator that is mounted on the exhaust nozzle or the support casing and that moves the exhaust nozzle relative to the tail cone in the forward/rearward direction to change a cross-sectional area of the exhaust gas passage.

### Advantageous Effects of Invention

According to one aspect of the present disclosure, the cross-sectional area of the exhaust gas passage can be changed despite the simple structure of the exhaust nozzle.

### Brief Description of Drawings

FIG. 1 is a schematic view of a gas turbine engine.
FIG. 2 is an enlarged view of an exhaust gas passage and its vicinity, and shows an exhaust nozzle in a normal position.
FIG. 3 is an enlarged view of the exhaust gas passage and its vicinity, and shows the exhaust nozzle in the normal position and in a post-movement position.

### Description of Embodiments

### (Overview of Gas Turbine Engine)

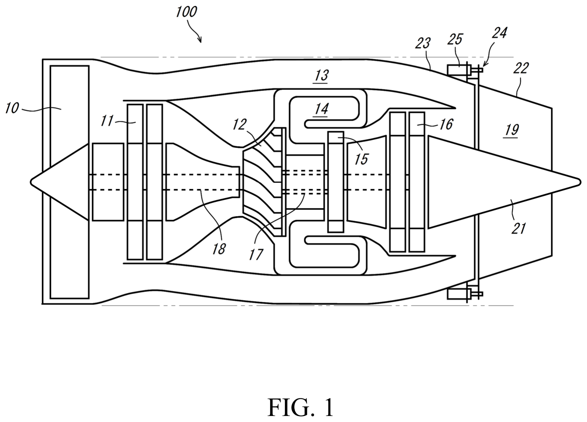

Hereinafter, embodiments will be described. First, an overview of a gas turbine engine (hereinafter simply referred to as an "engine") 100 according to an embodiment will be given. FIG. 1 is a schematic view of the engine 100 according to the present embodiment. The left-hand side in FIG. 1 corresponds to the forward direction of the engine 100, and the right-hand side in FIG. 1 corresponds to the rearward direction of the engine 100. In the following description, the forward direction of the engine 100 will be simply referred to as "forward", and the rearward direction of the engine 100 will be simply referred to as "rearward". The direction of the central axis of the engine 100 will be simply referred to as the "axial direction", the circumferential direction about the central axis of the engine 100 will be simply referred to as the "circumferential direction", and the radial direction of the engine 100 will be simply referred to as the "radial direction".

The engine 100 of the present embodiment is a twin-spool turbofan engine for aircrafts. However, the engine 100 is not limited to a particular use or form. The engine 100 takes in air through a fan 10 and supplies the air to a low-pressure compressor 11 and to a bypass passage 13 located outside the low-pressure compressor 11 in the radial direction. The air supplied to the low-pressure compressor 11 is compressed by the low-pressure compressor 11, further compressed by a high-pressure compressor 12, and then supplied to a combustor 14. The combustor 14 injects fuel into the compressed air and burns the fuel, thereby generating high-temperature, high-pressure combustion gas.

The combustion gas generated in the combustor 14 is supplied to a high-pressure turbine 15 and a low-pressure turbine 16 to rotationally drive the high-pressure turbine 15 and the low-pressure turbine 16. The high-pressure turbine 15 is connected to the high-pressure compressor 12 via an outer shaft 17. Thus, the high-pressure compressor 12 rotates in conjunction with the rotational drive of the high-pressure turbine 15. The low-pressure turbine 16 is connected to the low-pressure compressor 11 and the fan 10 via an inner shaft 18. Thus, the low-pressure compressor 11 and the fan 10 rotate in conjunction with the rotational drive of the low-pressure turbine 16.

The combustion gas having passed through the high-pressure turbine 15 and the low-pressure turbine 16 merges with the air having passed through the bypass passage 13 and is discharged rearward as exhaust gas through an exhaust gas passage 19. The engine 100 according to the present embodiment can change the cross-sectional area of the exhaust gas passage 19. The purpose of changing the cross-sectional area of the exhaust gas passage 19 is not limited to a particular effect. For example, the cross-sectional area may be changed to adjust the thrust of the engine 100.

### (Mechanism for Changing Cross-Sectional Area of Exhaust Gas Passage)

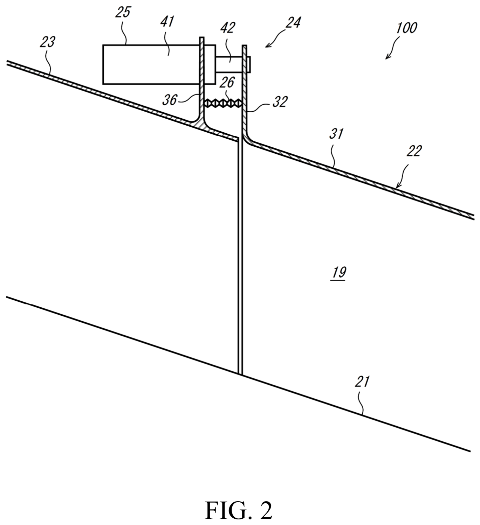

Next, the mechanism for changing the cross-sectional area of the exhaust gas passage 19 will be described. FIG. 2 is an enlarged view showing the exhaust gas passage 19 of FIG. 1 and its vicinity. The engine 100 according to the present embodiment includes a tail cone 21, an exhaust nozzle 22, a support casing 23, and a variable nozzle structure 24. The following describes these components sequentially.

### <Tail Cone>

As shown in FIG. 1, the tail cone 21 is a component that is located downstream of the high-pressure turbine 15 and the low-pressure turbine 16 in the flow direction of the combustion gas and that guides the exhaust gas rearward after the exhaust gas has passed through the high-pressure turbine 15 and the low-pressure turbine 16. The tail cone 21 has the shape of a circular cone having a smaller outer diameter at the rear than at the front. The tail cone 21 need not be an exact circular cone and may have a hemispherical rearward end; that is, the tail cone 21 is not limited to a particular shape.

### <Exhaust Nozzle>

The exhaust nozzle 22 is a component covering a part of the tail cone 21 from outside in the radial direction. The exhaust nozzle 22 defines the exhaust gas passage 19 between itself and the tail cone 21. Although the exhaust nozzle 22 of the present embodiment covers a part of the tail cone 21 from outside in the radial direction, the exhaust nozzle 22 may cover the entire tail cone 21 from outside in the radial direction. In the present embodiment, the rear end of the exhaust nozzle 22 is located forward of the rear end of the tail cone 21. The rear end of the exhaust nozzle 22 may be located rearward of the rear end of the tail cone 21, or may be at the same location as the rear end of the tail cone 21 in the axial direction.

As shown in FIG. 2, the exhaust nozzle 22 of the present embodiment includes a nozzle main body 31 and a first fixing portion 32. The nozzle main body 31 has the shape of a tube with a cross-sectional area that decreases rearward. More specifically, the nozzle main body 31 has the shape of a circular truncated cone having a larger inner diameter at the front than at the rear. The nozzle main body 31 need not be an exact circular truncated cone and may have a non-circular rear end; that is, the nozzle main body 31 is not limited to a particular shape. The first fixing portion 32 is shaped as a circular ring and located at the tip of the exhaust nozzle 22. When viewed in cross-section, the first fixing portion 32 extends outward from the front end of the nozzle main body 31 in the radial direction. The first fixing portion 32 may have a shape other than a circular ring.

### <Support Casing>

The support casing 23 is a component that supports the exhaust nozzle 22. As shown in FIG. 1, in the present embodiment, the casing defining the bypass passage 13 functions as the support casing 23. The support casing 23 is located upstream of the exhaust nozzle 22 in the flow direction of the exhaust gas and has the shape of a tube. As shown in FIG. 2, the support casing 23 includes a second fixing portion 36 located at its rear. The second fixing portion 36 is shaped as a circular ring and protrudes outward in the radial direction. The second fixing portion 36 may have a shape other than a circular ring.

The support casing 23 supports the exhaust nozzle 22 movably in the forward/rearward direction. The term "forward/rearward direction" as used herein is intended to include not only the axial direction but also directions slightly inclined with respect to the axial direction. The support casing 23 of the present embodiment supports the exhaust nozzle 22 movably in the forward/rearward direction via an actuator 25 described later. The engine 100 according to the present embodiment may further include: through holes in the first fixing portion 32 of the exhaust nozzle 22; and rod-shaped components extending rearward from the second fixing portion 36 of the support casing 23 and passing through the through holes. With this configuration, the support casing 23 can support the exhaust nozzle 22 movably in the forward/rearward direction via the rod-shaped components as well as via the actuator 25. The mechanism for supporting the exhaust nozzle 22 movably in the forward/rearward direction is not limited to the configuration of the present embodiment.

### <Variable Nozzle Structure>

The variable nozzle structure 24 includes the first fixing portion 32 of the exhaust nozzle 22, the second fixing portion 36 of the support casing 23, the actuator 25, and an extendable/retractable seal 26. The first fixing portion 32 of the exhaust nozzle 22 and the second fixing portion 36 of the support casing 23 are as already described. The following describes the actuator 25 and the extendable/retractable seal 26.

The actuator 25 is a device that moves the exhaust nozzle 22 relative to the tail cone 21 in the forward/rearward direction. The actuator 25 is not limited to a particular form and may be, for example, an electric actuator or a hydraulic actuator. The engine 100 of the present embodiment includes actuators 25 arranged at different locations in the circumferential direction. The number of the actuators 25 in the engine 100 is not limited to a particular value.

As shown in FIG. 2, each actuator 25 of the present embodiment includes an actuator main body 41 and a rod 42 that moves relative to the actuator main body 41 in the forward/rearward direction. The actuator main body 41 is fixed to the second fixing portion 36 of the support casing 23. The rod 42 is fixed at its tip to the first fixing portion 32 of the exhaust nozzle 22. Accordingly, the movement of the rod 42 relative to the actuator main body 41 in the forward/rearward direction causes the exhaust nozzle 22 to move relative to the support casing 23 and the tail cone 21 in the forward/rearward direction.

Although the actuators 25 of the present embodiment are mounted on the support casing 23, the actuators 25 may be mounted on the exhaust nozzle 22. In this case, the actuator main bodies 41 may be fixed to the first fixing portion 32 of the exhaust nozzle 22, and the rods 42 may be fixed to the second fixing portion 36 of the support casing 23.

In the present embodiment, the variable nozzle structure 24 is located outside the exhaust gas passage 19 in the radial direction. Accordingly, the variable nozzle structure 24 does not disturb the flow of the exhaust gas passing through the exhaust gas passage 19. In addition, the actuators 25 are not exposed to the hot exhaust gas and therefore are less likely to degrade.

Furthermore, in a front view of the engine 100, the variable nozzle structure 24 is located inside the outer edge of the engine 100 excluding the variable nozzle structure 24 (see the dashed-double dotted lines in FIG. 1). Accordingly, the increase in the frontal projected area of the engine 100 can be minimized. In the present embodiment, the portion of the support casing 23 that has the maximum outer diameter is located radially outside the radially outermost portion of the variable nozzle structure 24. For example, in the case where a device is located at a radially outer portion of the engine 100, the device is included in "the engine 100 excluding the variable nozzle structure 24".

The extendable/retractable seal 26 is a seal located between the exhaust nozzle 22 and the support casing 23. The extendable/retractable seal 26 has the shape of a circular ring extending continuously in the circumferential direction along the boundary between the exhaust nozzle 22 and the support casing 23. Alternatively, the extendable/retractable seal 26 may have a shape other than a circular ring. For example, the extendable/retractable seal 26 may be discontinuous in the circumferential direction.

In the present embodiment, the front end of the extendable/retractable seal 26, namely, its upstream end in the flow direction of the exhaust gas, is fixed to the second fixing portion 36 of the support casing 23. Alternatively, the front end of the extendable/retractable seal 26 may be fixed to a portion other than the second fixing portion 36 of the support casing 23. The rear end of the extendable/retractable seal 26, namely, its downstream end in the flow direction of the exhaust gas, is fixed to the first fixing portion 32 of the exhaust nozzle 22. Alternatively, the rear end of the extendable/retractable seal 26 may be fixed to a portion other than the first fixing portion 32 of the exhaust nozzle 22.

The extendable/retractable seal 26 of the present embodiment is extendable and retractable in the forward/rearward direction. The extendable/retractable seal 26 may be, for example, a bellows seal. Being extendable and retractable in the forward/rearward direction, the extendable/retractable seal 26 of the present embodiment can deform together with the movement of the exhaust nozzle 22 in the forward/rearward direction. Accordingly, even when the exhaust nozzle 22 moves in the forward/rearward direction, the extendable/retractable seal 26 can seal a gap between the exhaust nozzle 22 and the support casing 23 to prevent leakage of the exhaust gas through the gap.

### <Change of Cross-Sectional Area of Exhaust Gas Passage>

The following describes the change of the cross-sectional area of the exhaust gas passage 19. In the present embodiment, the exhaust nozzle 22 moves relative to the tail cone 21 in the forward/rearward direction, thereby changing the cross-sectional area of the exhaust gas passage 19. The cross-sectional area of the exhaust gas passage 19 is defined herein as the area of a cross-section taken at a given axial point of the exhaust gas passage 19 and perpendicular to the axial direction. For example, the given axial point of the exhaust gas passage 19 may be located at the center of the tail cone 21 in the axial direction or may be an axial point at which the cross-sectional area of the exhaust gas passage 19 is at minimum.

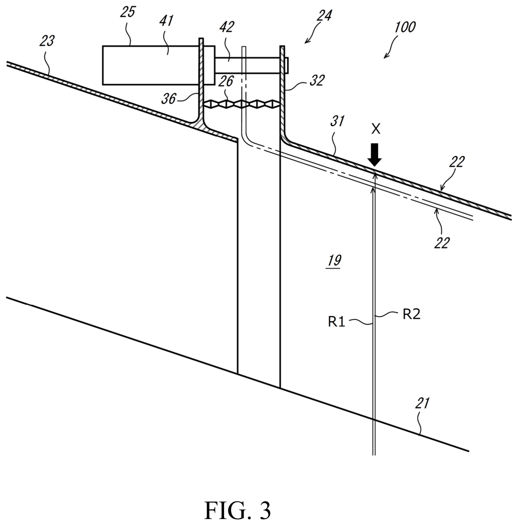

FIG. 3 shows the exhaust nozzle 22 in a normal position and in a post-movement position. Hereinafter, the position of the exhaust nozzle 22 indicated by a dashed-dotted line in FIG. 3 will be referred to as the "normal position", and the position of the exhaust nozzle 22 indicated by a solid line will be referred to as the "post-movement position". In FIG. 3, the given axial point of the exhaust gas passage 19 is denoted by X. At the given axial point of the exhaust gas passage 19, the exhaust nozzle 22 in the post-movement position has an inner diameter R2 larger than an inner diameter R1 of the exhaust nozzle 22 in the normal position.

The exhaust gas passage 19 is a passage defined between the exhaust nozzle 22 and the tail cone 21. Accordingly, the cross-sectional area of the exhaust gas passage 19 at the given axial point X depends on the outer diameter of the tail cone 21 and the inner diameter of the exhaust nozzle 22 at the given axial point X. When the exhaust nozzle 22 moves rearward relative to the tail cone 21, namely, when the exhaust nozzle 22 moves from the normal position to the post-movement position, the inner diameter of the exhaust nozzle 22 at the given axial point of the exhaust gas passage 19 increases, and therefore the cross-sectional area of the exhaust gas passage 19 increases.

When the exhaust nozzle 22 moves further rearward from the post-movement position, the inner diameter of the exhaust nozzle 22 at the given axial point X of the exhaust gas passage 19 further increases, and therefore the cross-sectional area of the exhaust nozzle 22 further increases. When the exhaust nozzle 22 moves forward from the post-movement position, the inner diameter of the exhaust nozzle 22 at the given axial point X of the exhaust gas passage 19 decreases, and accordingly the cross-sectional area of the exhaust gas passage 19 decreases.

As described above, in the present embodiment, the cross-sectional area of the exhaust gas passage 19 can be changed by using the actuators 25 to move the exhaust nozzle 22 relative to the tail cone 21 in the forward/rearward direction. Thus, the engine 100 according to the present embodiment can change the cross-sectional area of the exhaust gas passage 19 despite employing the exhaust nozzle 22 with a simple structure.

### (Summary)

A first item disclosed herein is a gas turbine engine including: a tail cone; an exhaust nozzle covering the tail cone from outside in a radial direction, with an exhaust gas passage defined between the exhaust nozzle and the tail cone; a tubular support casing that is located upstream of the exhaust nozzle and that supports the exhaust nozzle movably in a forward/rearward direction; and an actuator that is mounted on the exhaust nozzle or the support casing and that moves the exhaust nozzle relative to the tail cone in the forward/rearward direction to change a cross-sectional area of the exhaust gas passage.

With this configuration, the cross-sectional area of the exhaust gas passage can be changed despite the simple structure of the exhaust nozzle.

A second item disclosed herein is the gas turbine engine according to the first item, further including an extendable/retractable seal extendable and retractable in the forward/rearward direction, the extendable/retractable seal having an upstream end fixed to the support casing and a downstream end fixed to the exhaust nozzle.

With this configuration, leakage of exhaust gas through a gap between the exhaust nozzle and the support casing can be prevented even when the exhaust nozzle moves in the forward/rearward direction.

A third item disclosed herein is the gas turbine engine according to the second item, wherein the exhaust nozzle includes a first fixing portion to which the extendable/retractable seal is fixed, the support casing includes a second fixing portion to which the actuator and the extendable/retractable seal are fixed, and a variable nozzle structure including the actuator, the extendable/retractable seal, the first fixing portion, and the second fixing portion is located outside the exhaust gas passage in the radial direction.

With this configuration, the variable nozzle structure does not disturb the flow of exhaust gas passing through the exhaust gas passage.

A fourth item disclosed herein is the gas turbine engine according to the third item, wherein in a front view of the gas turbine engine, the variable nozzle structure is located inside an outer edge of the gas turbine engine excluding the variable nozzle structure.

With this configuration, the increase in the frontal projected area of the engine can be minimized.

### Reference Signs List

- 21: tail cone
- 22: exhaust nozzle
- 23: support casing
- 24: variable nozzle structure
- 25: actuator
- 26: extendable/retractable seal
- 32: first fixing portion
- 36: second fixing portion
- 100: gas turbine engine

## Claims

1. A gas turbine engine comprising:
a tail cone;
an exhaust nozzle covering the tail cone from outside in a radial direction, with an exhaust gas passage defined between the exhaust nozzle and the tail cone;
a tubular support casing that is located upstream of the exhaust nozzle and that supports the exhaust nozzle movably in a forward/rearward direction; and
an actuator that is mounted on the exhaust nozzle or the support casing and that moves the exhaust nozzle relative to the tail cone in the forward/rearward direction to change a cross-sectional area of the exhaust gas passage.

2. The gas turbine engine according to claim 1, further comprising an extendable/retractable seal extendable and retractable in the forward/rearward direction, the extendable/retractable seal having an upstream end fixed to the support casing and a downstream end fixed to the exhaust nozzle.

3. The gas turbine engine according to claim 2, wherein
the exhaust nozzle includes a first fixing portion to which the extendable/retractable seal is fixed,
the support casing includes a second fixing portion to which the actuator and the extendable/retractable seal are fixed, and
a variable nozzle structure including the actuator, the extendable/retractable seal, the first fixing portion, and the second fixing portion is located outside the exhaust gas passage in the radial direction.

4. The gas turbine engine according to claim 3, wherein in a front view of the gas turbine engine, the variable nozzle structure is located inside an outer edge of the gas turbine engine excluding the variable nozzle structure.
